# EUROPEAN PATENT SPECIFICATION

(11) **EP 3 771 085 B1**
(45) Date of publication and mention of the grant of the patent: **15.03.2023**
(21) Application number: 19771896.8
(22) Date of filing: 18.01.2019
(51) Int. Cl.: H02M 5/458, H02M 7/23, H02M 1/10, B60L 9/24, B60L 9/30, B60L 50/13

(54) **POWER CONVERSION DEVICE AND POWER CONVERSION DEVICE CONTROL METHOD**
LEISTUNGSUMWANDLUNGSVORRICHTUNG UND LEISTUNGSUMWANDLUNGSVORRICHTUNGSTEUERUNGSVERFAHREN
DISPOSITIF DE CONVERSION D'ÉNERGIE ET PROCÉDÉ DE COMMANDE DE DISPOSITIF DE CONVERSION D'ÉNERGIE

(30) Priority: 23.03.2018 JP 2018057294
(43) Date of publication of application: 27.01.2021
(73) Proprietor: Hitachi, Ltd., Tokyo 100-8280 (JP)
(72) Inventor: OURA, Yuta, Tokyo 100-8280 (JP); INARIDA, Satoru, Tokyo 100-8280 (JP); MOCHIZUKI, Kento, Tokyo 100-8280 (JP); NISHIMURA, Yoshitaka, Tokyo 100-8280 (JP)
(74) Representative: Mewburn Ellis LLP
(86) International application number: PCT/JP2019/001523
(87) International publication number: WO 2019/181162

(56) References cited:
- WO-A1-2012/105282
- JP-A- H1 198 848
- JP-A- H09 121 548
- JP-A- 2000 004 503
- JP-A- 2013 110 939
- JP-A- 2014 057 384
- US-A1- 2013 313 059
- US-A1- 2017 033 711

## Description

### Technical Field

The present invention relates to a power conversion device and a power conversion device control method.

### Background Art

A rail vehicle that includes a power conversion device for driving an electric motor has become popular. The power conversion device generally includes a converter that converts a single-phase AC power supplied from an overhead line to a DC power, and an inverter that drives an electric motor using the converted DC power as a power source. While the converter causes a semiconductor element (for example, IGBT) to perform a switching operation, an influence of harmonics due to the operation propagates to the overhead line to adversely affect a railway infrastructure (signal device and the like) coupled via the overhead line.

Patent Literature 1 discloses a rail vehicle that includes a power generation unit and the rail vehicle is configured to receive a supply of an AC power from also a power generation unit other than an overhead line. In addition, Patent Literature 1 discloses that a converter in a power conversion device is coupled to each of a plurality of AC power supplies, the converter includes means to be coupled to the overhead line and means to be coupled to an electric generator driven by an engine, and the converter performs a power conversion operation corresponding to the coupled AC power supply.

### Citation List

### Patent Literature

Patent Literature 1: Japanese Unexamined Patent Application Publication No. 2014-140294

US 2017/033711 proposes a power conversion device and AC electric-vehicle drive system.

JP 2000 004503A proposes an electric car control device.

### Summary of Invention

### Technical Problem

For the switching operation of the converter that performs the power conversion operation corresponding to a plurality of AC power supplies, the control can be simplified by employing the same switching operation regardless the respective AC power supplies. However, for example, in the case of coupled to the overhead line, the influence of the harmonics on the railway infrastructure and thermal effect on a switching element need to be considered, while in the case of coupled to the electric generator, a harmonic content of the current to the electric generator and the thermal effect on the switching element need to be considered. Without these considerations, a problem, such as inductive disturbance to the railway infrastructure, reduction in operational efficiency of the electric generator due to the harmonic current, and shortened lifespan of the switching element, causes. Since these points are not considered on the rail vehicle disclosed in Patent Literature 1, a problem arises in that the influence of the harmonics due to the switching operation of the converter cannot be avoided.

### Solution to Problem

A power conversion device according to a first aspect of the present invention is provided in claim 1.

A power conversion device control method according to a second aspect of the present invention is provided in claim 5.

### Advantageous Effects of Invention

According to the present invention, the influence of the harmonics due to the switching operation of the converter can be avoided.

### Brief Description of Drawings

Fig. 1 is a drawing illustrating a configuration of a drive system.
Fig. 2 is a drawing illustrating an exemplary configuration when the drive system is mounted to a train.
Fig. 3 is a drawing illustrating a configuration of a drive control device.
Fig. 4 is a flowchart illustrating an operation of an operation command unit in the drive control device.
Fig. 5 is a flowchart illustrating an operation of a PWM converter control unit in the drive control device.
Figs. 6(A) and 6(B) are drawings describing an aspect where a carrier frequency by an overhead line converter control unit has a value smaller than that of a carrier frequency by an engine converter control unit.
Figs. 7(A) and 7(B) are drawings describing an aspect where the carrier frequency by the overhead line converter control unit has a value greater than that of the carrier frequency by the engine converter control unit.
Fig. 8 is a drawing illustrating a modification of the converter.
Fig. 9 is a drawing illustrating a modification of the converter.

### Description of Embodiments

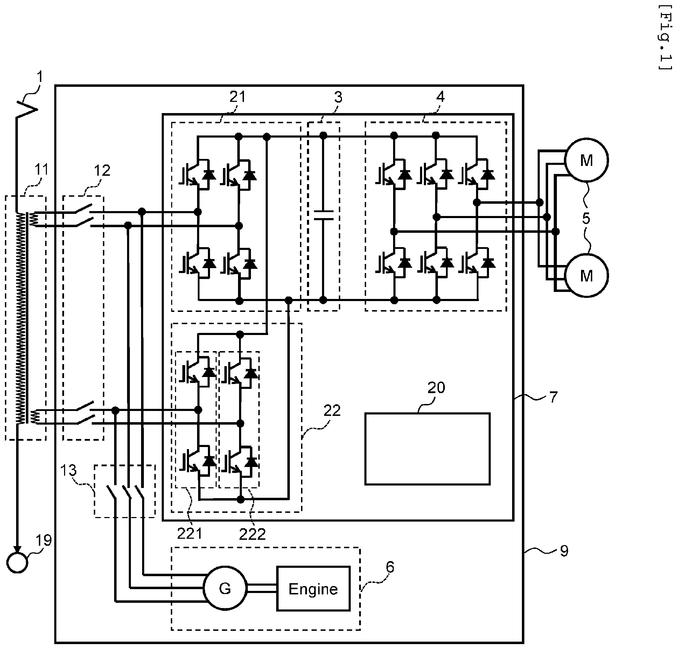

Fig. 1 is a drawing illustrating a configuration of a drive system 9. As illustrated in Fig. 1, the drive system 9 of this embodiment is coupled to a power collector 1 via a main transformer 11. The power collector 1 takes in a single-phase AC power from an overhead line (not illustrated), which is coupled to an electrical substation to function as a single-phase AC power supply, and outputs the single-phase AC power to a winding on a high voltage side of the main transformer 11. Two windings are disposed on a low voltage side of the main transformer 11, the single-phase AC power from the overhead line is stepped down and supplied to each winding. Another end of the winding on the high voltage side of the main transformer 11 is coupled to a rail 19.

The drive system 9 includes a power generation unit 6, a power conversion device 7, a contactor 13, and a contactor 12. The power generation unit 6 includes an engine and an electric generator driven by the engine, and functions as a three-phase AC power supply that supplies a three-phase AC power. The contactor 13 is coupled between a three-phase current output of the power generation unit 6 and the power conversion device 7. The contactor 12 is coupled between the main transformer 11 and the power conversion device 7.

The power conversion device 7 includes power supply power converter circuits 21 and 22, a smoothing capacitor 3, an electric motor driving converter circuit 4, and a drive control device 20. The smoothing capacitor 3 is coupled to direct-current sides of the power supply power converter circuits 21, 22 and smooths a DC voltage. The power supply power converter circuits 21 and 22 each include switching circuits to convert the AC power into the DC power for two phases. The switching circuit includes series-connected two connection bodies, and in the connection body, a semiconductor element (for example, IGBT) having a selfarc-extinguishing ability and a diode are coupled in anti-parallel. Hereinafter, the power supply power converter circuit 21 and the power supply power converter circuit 22 are also collectively referred to as a converter. The electric motor driving converter circuit 4 includes a plurality of semiconductor elements in combination, and drives a main motor 5 having voltages at both ends of the smoothing capacitor 3 as voltage sources. The drive control device 20 controls the switching operations of the power supply power converter circuits 21 and 22.

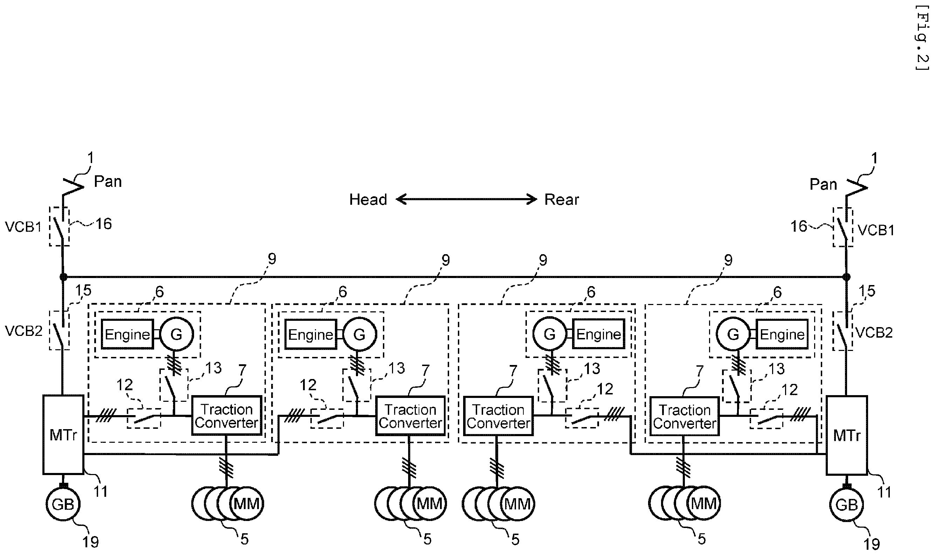

Fig. 2 is a drawing illustrating an exemplary configuration when the drive system 9 is mounted to a train. Fig. 2 illustrates an embodiment where the four drive systems 9 illustrated in Fig. 1 are mounted to four train cars. In this embodiment, the power collector 1 and the main transformer 11 are mounted to each of the first and the last cars, and the single-phase AC power from the overhead line is supplied from the power collectors 1 to the respective main transformers 11 via switches 15, 16. Then, the two drive systems 9 on the first car side receive the single-phase AC power (by the amount of two windings) from the main transformer 11 mounted to the first car. The two drive systems 9 on the last car side receive the single-phase AC power (by the amount of two windings) from the main transformer 11 mounted to the last car. The power conversion device 7 (Traction Converter) illustrated in Fig. 2 includes the power supply power converter circuits 21 and 22, the smoothing capacitor 3, the electric motor driving converter circuit 4, and the drive control device 20 illustrated in Fig. 1.

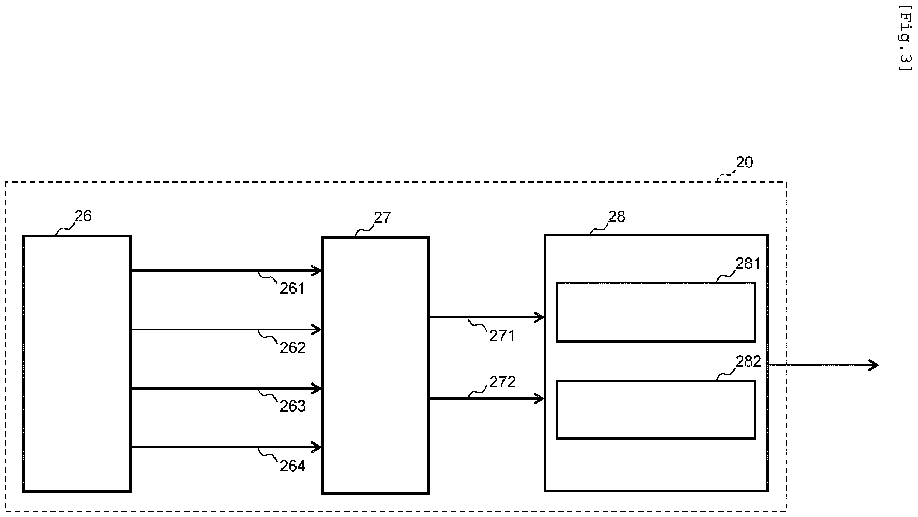

Fig. 3 is a drawing illustrating a configuration of the drive control device 20. The drive control device 20 includes a status monitoring unit 26, an operation command unit 27, and a PWM converter control unit 28. The status monitoring unit 26 is coupled to an upper control unit (not illustrated), and monitors whether the power conversion device 7 is supplied with the single-phase AC power from the overhead line or supplied with the three-phase AC power from the power generation unit 6. Then, when the AC power supply coupled to the power conversion device 7 is the overhead line and the single-phase AC power from the overhead line is supplied to the power conversion device 7, a signal 261 indicating a state where the AC power supply is the overhead line is output to the operation command unit 27. Meanwhile, when the AC power supply coupled to the power conversion device 7 is the power generation unit 6 and the three-phase AC power from the power generation unit 6 is supplied to the power conversion device 7, a signal 262 indicating a state where the AC power supply is the engine is output to the operation command unit 27. Furthermore, the status monitoring unit 26 outputs a signal 263 to instruct a converter start on the overhead line to the operation command unit 27 when starting the converter with the single-phase AC power from the overhead line, and outputs a signal 264 to instruct a converter start on the engine to the operation command unit 27 when starting the converter with the three-phase AC power from the power generation unit 6.

The operation command unit 27 outputs an overhead line switching operation signal 271 or an engine switching operation signal 272 to the PWM converter control unit 28 corresponding to a combination of the signals 261 to 264 input from the status monitoring unit 26. Specifically, when the signal 261 indicating the state where the AC power supply is the overhead line and the signal 263 instructing the converter start on the overhead line are input, the overhead line switching operation signal 271 is used as an output signal to the PWM converter control unit 28 corresponding to these input signals. Meanwhile, when the signal 262 indicating the state where the AC power supply is the engine and the signal 264 instructing the converter start on the engine are input, the engine switching operation signal 272 is used as an output signal to the PWM converter control unit 28 corresponding to these input signals.

The PWM converter control unit 28 includes an overhead line converter control unit 281 that drives the power supply power converter circuits 21 and 22 at a carrier frequency = F_{COHL} [Hz] corresponding to the overhead line switching operation signal 271. Furthermore, the PWM converter control unit 28 includes an engine converter control unit 282 that drives the power supply power converter circuits 21 and 22 at a carrier frequency = F_{CENG} [Hz] corresponding to the engine switching operation signal 272. The carrier frequency = F_{COHL} [Hz] is a frequency that does not overlap with an operating frequency of a device installed in the railway infrastructure and a frequency above which thermal effects on the semiconductor element included in the converter become unacceptable. The carrier frequency = F_{CENG} [Hz] is a frequency at which an amount of harmonic current in the electric generator is acceptable and a frequency above which thermal effects on the semiconductor element included in the converter become unacceptable.

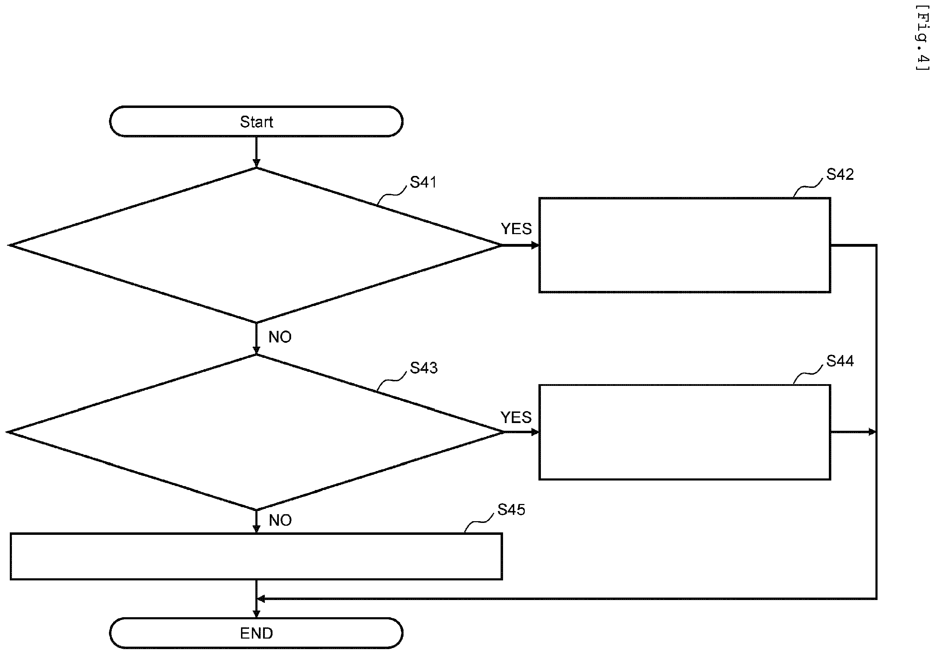

Fig. 4 is a flowchart illustrating an operation of the operation command unit 27 in the drive control device. In the process of Step S41, whether the signal 261 indicating the state where the AC power supply is the overhead line is ON (signal present), and the signal 262 indicating the state where the AC power supply is the engine is OFF (no signal), and the signal 263 instructing the converter start on the overhead line is ON, and the signal 264 instructing the converter start on the engine is OFF or not is determined. When the condition is satisfied in Step S41, the process proceeds to Step S42.

In Step S42, the overhead line switching operation signal 271 is turned ON, and the engine switching operation signal 272 is turned OFF. When the condition is not satisfied in Step S41, the process proceeds to Step S43.

In Step S43, whether the signal 261 indicating the state where the AC power supply is the overhead line is OFF, and the signal 262 indicating the state where the AC power supply is the engine is ON, and the signal 263 instructing the converter start on the overhead line is OFF, and the signal 264 instructing the converter start on the engine is ON or not is determined. When the condition is satisfied in Step S43, the process proceeds to Step S44.

In Step S44, the overhead line switching operation signal 271 is turned OFF, and the engine switching operation signal 272 is turned ON. When the condition is not satisfied in Step S43, the process proceeds to Step S45.

In Step S45, the overhead line switching operation signal 271 is turned OFF, and the engine switching operation signal 272 is turned OFF. The process of the flowchart illustrated in Fig. 4 ends after the processes of Steps S42, 43, and 45. The process of the flowchart illustrated in Fig. 4 is periodically repeated.

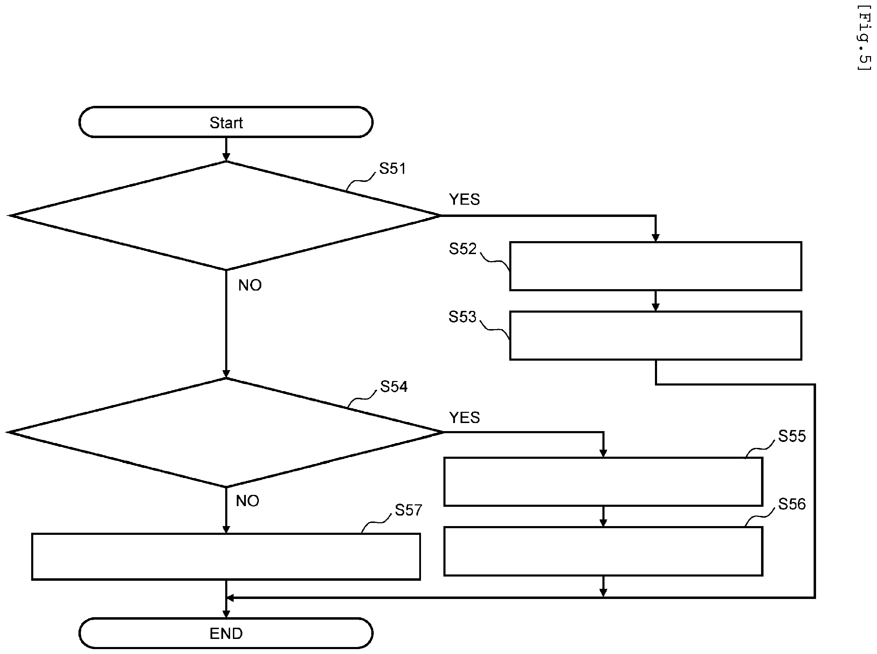

Fig. 5 is a flowchart illustrating an operation of the PWM converter control unit 28 in the drive control device 20. In the process of Step S51, whether the overhead line switching operation signal 271 is ON and the engine switching operation signal 272 is OFF or not is determined. When the condition of Step S51 is satisfied, the process proceeds to Step S52.

In Step S52, the overhead line converter control unit 281 is operated to select the carrier frequency = F_{COHL} [Hz]. Subsequently, proceeding to Step S53, a PWM pulse signal of the carrier frequency = F_{COHL} [Hz] is output to cause the power supply power converter circuits 21 and 22 to perform the switching operation.

When the condition of Step S51 is not satisfied, the process proceeds to Step S54. In Step S54, whether the overhead line switching operation signal 271 is OFF and the engine switching operation signal 272 is ON or not is determined. When the condition of Step S54 is satisfied, the process proceeds to Step S55. In Step S55, the engine converter control unit 282 is operated to select the carrier frequency = F_{CENG} [Hz]. Subsequently, proceeding to Step S56, a PWM pulse signal of the carrier frequency = F_{CENG} [Hz] is output to cause the power supply power converter circuits 21 and 22 to perform the switching operation.

When the condition of Step S54 is not satisfied, the process proceeds to Step S57. In Step S57 the PWM pulse signal is not output. The process of the flowchart illustrated in Fig. 5 ends after the processes of Steps S53, 56, and 57. The process of the flowchart illustrated in Fig. 5 is periodically repeated.

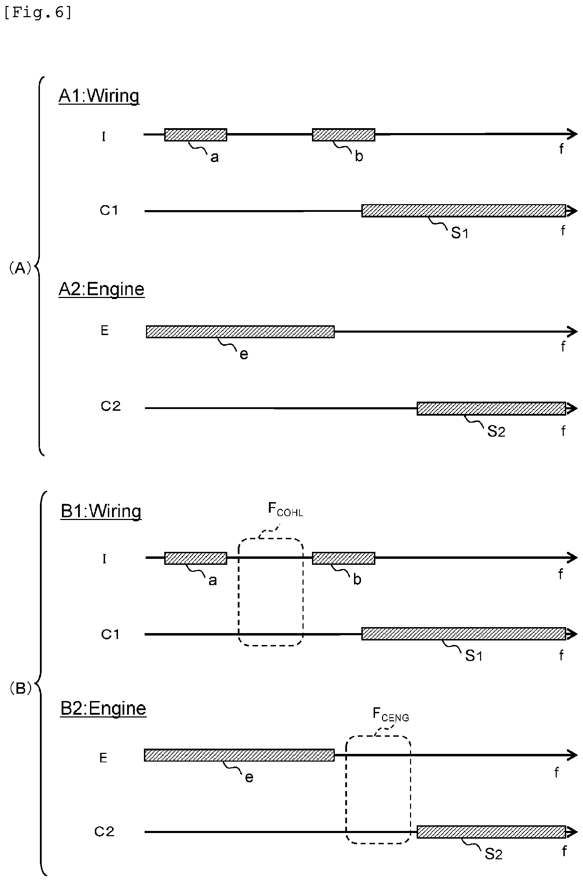

Figs. 6(A) and 6(B) are drawings describing an aspect where the carrier frequency = F_{COHL} [Hz] by the overhead line converter control unit 281 has a value smaller than that of the carrier frequency = F_{CENG} [Hz] by the engine converter control unit 282. In Figs. 6(A) and 6(B), the horizontal axis indicates the frequency, regions indicated by diagonal lines are regions influenced when superimposed on the carrier frequency of the converter.

Fig. 6(A) illustrates a case where the embodiment of the present invention is not applied, and Fig. 6(B) illustrates a case where the embodiment of the present invention is applied.

In Fig. 6(A), assuming a restraint condition on the overhead line as a restraint condition A1, an operating frequency band I of infrastructure side devices includes an operating frequency band a used by an infrastructure side device A and an operating frequency band b used by an infrastructure side device B. Furthermore, assuming the restraint condition on the overhead line as the restraint condition A1, a carrier frequency band C1 of the switching element of the converter when operating on the overhead line includes a region s1 where the thermal effect caused when the carrier frequency of the converter is increased becomes unacceptable. Meanwhile, assuming a restraint condition on the engine as a restraint condition A2, a carrier frequency band E where the harmonics are included in the current flowing through the electric generator includes a region e where an amount of the harmonics of the current flowing through the electric generator becomes unacceptable. Furthermore, a carrier frequency band C2 of the switching element of the converter when operating on the engine includes a region s2 where the thermal effect caused when the carrier frequency of the converter is increased becomes unacceptable. When the embodiment of the present invention is not applied, the carrier frequencies that avoid the restraint condition A1 on the overhead line and the restraint condition A2 on the engine are not present. The amount of the harmonics of the current flowing through the electric generator means an amount of the harmonic current of the first harmonic or more. The harmonic current is included in the current flowing through the electric generator and generated by the switching operation of the converter. While a heat generation amount of the electric generator is increased by making the current flow through the electric generator, its acceptable value is decided in the specification of the electric generator.

When the embodiment of the present invention is applied, as illustrated in Fig. 6(B), under a restraint condition B1 on the overhead line, the carrier frequency = F_{COHL} [Hz] is selected as the carrier frequency, and under a restraint condition B2 on the engine, the carrier frequency = F_{CENG} [Hz] is selected as the carrier frequency. In this case, the carrier frequency = F_{COHL} [Hz] in the power conversion operation of the power supply power converter circuits 21 and 22 when the overhead line as the single-phase AC power supply is coupled via the power collector 1, the main transformer 11, and the first contactor 12 has a value smaller than that of the carrier frequency = F_{CENG} [Hz] in the power conversion operation of the power supply power converter circuits 21 and 22 when the power generation unit 6 as the three-phase AC power supply is coupled via the second contactor 13. Accordingly, the influence of the harmonics due to the switching operation of the converter on the railway infrastructure and the electric generator can be avoided.

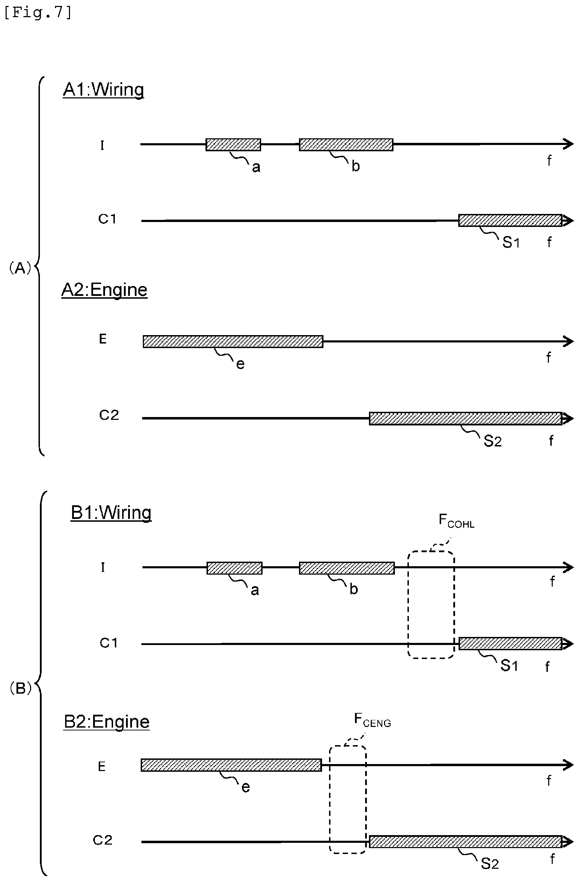

Figs. 7(A) and 7(B) are drawings describing an aspect where the carrier frequency = F_{COHL} [Hz] by the overhead line converter control unit 281 has a value greater than that of the carrier frequency = F_{CENG} [Hz] by the engine converter control unit 282.

Fig. 7(A) illustrates a case where the embodiment of the present invention is not applied, and Fig. 7(B) illustrates a case where the embodiment of the present invention is applied.

In Fig. 7(A), assuming the restraint condition on the overhead line as the restraint condition A1, the operating frequency band I of the infrastructure side devices includes the operating frequency band a used by the infrastructure side device A and the operating frequency band b used by the infrastructure side device B. Furthermore, assuming the restraint condition on the overhead line as the restraint condition A1, the carrier frequency band C1 of the switching element of the converter when operating on the overhead line includes the region s1 where the thermal effect caused when the carrier frequency of the converter is increased becomes unacceptable. Meanwhile, assuming the restraint condition on the engine as the restraint condition A2, the carrier frequency band E where the harmonics are included in the current flowing through the electric generator includes the region e where the amount of the harmonics of the current flowing through the electric generator becomes unacceptable. Furthermore, the carrier frequency band C2 of the switching element of the converter when operating on the engine includes the region s2 where the thermal effect caused when the carrier frequency of the converter is increased becomes unacceptable. When the embodiment of the present invention is not applied, the carrier frequencies that avoid the restraint condition A1 on the overhead line and the restraint condition A2 on the engine are not present.

When the embodiment of the present invention is applied, as illustrated in Fig. 7(B), under the restraint condition B1 on the overhead line, the carrier frequency = F_{COHL} [Hz] is selected as the carrier frequency, and under the restraint condition B2 on the engine, the carrier frequency = F_{CENG} [Hz] is selected as the carrier frequency. In this case, the carrier frequency = F_{COHL} [Hz] in the power conversion operation of the power supply power converter circuits 21 and 22 when the overhead line as the single-phase AC power supply is coupled via the power collector 1, the main transformer 11, and the first contactor 12 has a value greater than that of the carrier frequency = F_{CENG} [Hz] in the power conversion operation of the power supply power converter circuits 21 and 22 when the power generation unit 6 as the three-phase AC power supply is coupled via the second contactor 13. Accordingly, the influence of the harmonics due to the switching operation of the converter on the railway infrastructure and the electric generator can be avoided.

As described above, when the embodiment of the present invention is applied, the switching operation at the carrier frequency F_{COHL} for satisfying the restraint condition of the power conversion operation on the overhead line and the switching operation at the carrier frequency F_{CENG} for satisfying the restraint condition of the power conversion operation on the engine can be each controlled. Therefore, the switching operation of the converter (power supply power converter circuits 21 and 22) is changed corresponding to the AC power supply, thereby ensuring satisfying the different restraint conditions of the power conversion operations on the respective AC power supplies.

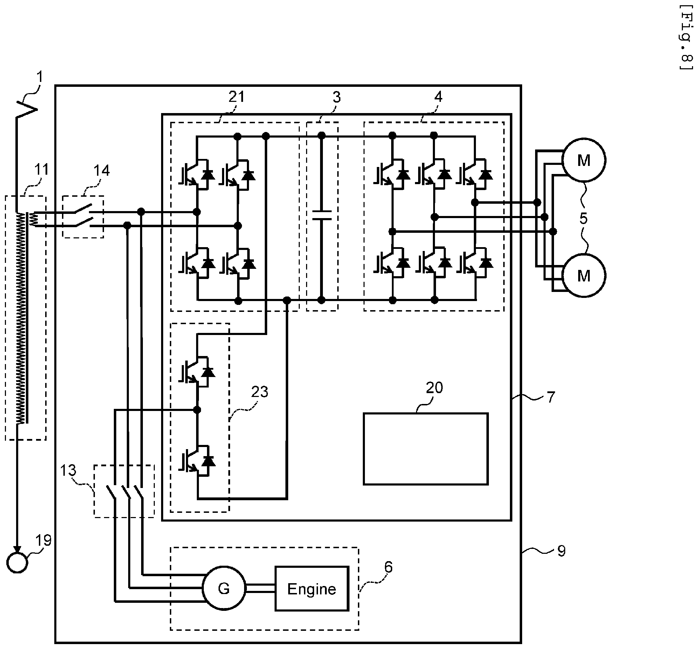

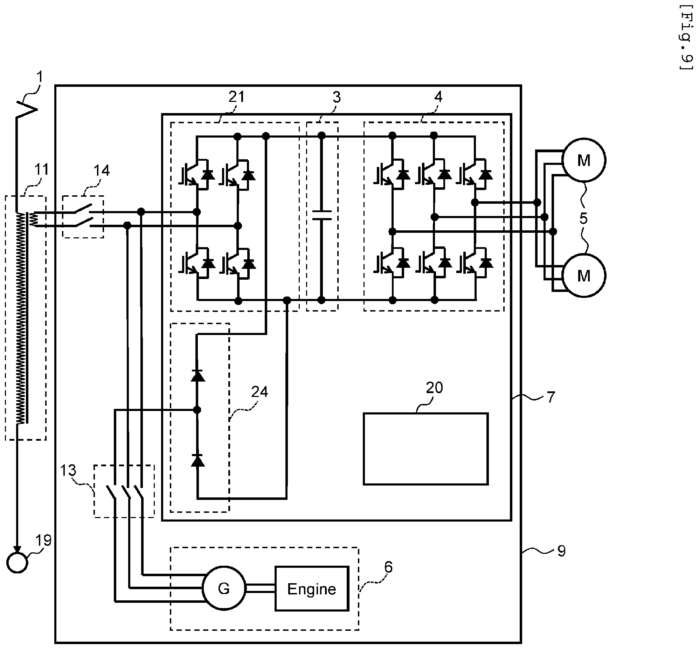

Next, modifications of the converter will be described using Fig. 8 and Fig. 9. In Fig. 1, the power supply power converter circuit 21 and the power supply power converter circuit 22 (converter) include switching circuits for two phases that include series-connected two connection bodies, and in the connection body, a semiconductor element and a diode are coupled in anti-parallel. The example illustrated in Fig. 8 has a configuration where the power supply power converter circuit 21 similar to that illustrated in Fig. 1 is coupled to one winding on the low voltage side of the main transformer 11, and further a power converter circuit 23 for one phase is coupled. Other configurations are similar to those of Fig. 1.

In the example illustrated in Fig. 9, the power supply power converter circuit 21 similar to that illustrated in Fig. 1 is coupled to one winding on the low voltage side of the main transformer 11, and further, a power converter circuit 24 to which diodes are series-connected is applied instead of the power converter circuit 23 for one phase in the embodiment illustrated in Fig. 8. Other configurations are similar to those of Fig. 1.

The embodiments described above provide the following operational effects. (1) The power conversion device 7 includes the power supply power converter circuits 21 and 22 (converter) and the drive control device 20. The power supply power converter circuits 21 and 22 are coupled to the overhead line as the single-phase AC power supply or the power generation unit 6 as the three-phase AC power supply via the contactor 12, 13. The power supply power converter circuits 21 and 22 perform the power conversion operations to convert the single-phase AC power supplied from the overhead line or the three-phase AC power supplied from the power generation unit 6 into the DC power. The drive control device 20 controls each of the carrier frequency F_{COHL} and the carrier frequency F_{CENG}. The carrier frequency F_{COHL} is the carrier frequency in the power conversion operations of the power supply power converter circuits 21 and 22 when the overhead line is coupled. The carrier frequency F_{CENG} is the carrier frequency in the power conversion operations of the power supply power converter circuits 21 and 22 when the power generation unit 6 is coupled. Accordingly, the influence of the harmonics due to the switching operation of the converter can be avoided.

The status monitoring unit 26, the operation command unit 27, the PWM converter control unit 28, the overhead line converter control unit 281, the engine converter control unit 282 may be replaced by status monitoring means, operation command means, converter control means, overhead line converter control means, engine converter control means, respectively. The power converter circuit and the drive control unit may be replaced by power converter means and drive control means, respectively.

### List of Reference Signs

- 1: power collector
- 2: winding
- 3: smoothing capacitor
- 4: electric motor driving converter circuit
- 5: main motor
- 6: power generation unit
- 7: power conversion device
- 9: drive system
- 11: main transformer
- 12, 13: contactor
- 20: drive control device
- 21, 22: power supply power converter circuit
- 26: status monitoring unit
- 27: operation command unit
- 28: PWM converter control unit
- 281: overhead line converter control unit
- 282: engine converter control unit

## Claims

1. A power conversion device (7) for a drive system of a train comprising:
a power converter circuit (4) configured to be coupled to a first AC power supply or a second AC power supply (6) via a contactor (12, 13), the power converter circuit configured to perform a power conversion operation to convert a first AC power supplied from the first AC power supply or a second AC power supplied from the second AC power supply into a DC power, the first AC power being an AC power supplied from an overhead line, and the second AC power being an AC power generated by driving an electric generator (G) by an operation of an engine;
**characterized in that** a drive control unit (20) is configured to control a carrier frequency in the power conversion operation of the power converter circuit (4) such that when the first AC power is supplied from the first AC power supply, a carrier frequency is selected from a first carrier frequency band which does not overlap with an operating frequency of a device installed in a railway infrastructure coupled via the overhead line and above which thermal effects on a semiconductor element included in the converter are unacceptable, and when the second AC power is supplied from the second AC power supply (6), a carrier frequency is selected from a second carrier frequency band in which harmonic current in the electric generator is acceptable and above which thermal effects on the semiconductor element included in the converter are unacceptable.

2. The power conversion device according to claim 1,
wherein the drive control unit (20) is configured to drive the power converter circuit (4) by the power conversion operation at a first carrier frequency when the first AC power supply is coupled, and to drive the power converter circuit by the power conversion operation at a second carrier frequency different from the first carrier frequency when the second AC power supply (6) is coupled.

3. The power conversion device according to claim 1 or claim 2,
wherein the carrier frequency in the power conversion operation of the power converter circuit (4) when the first AC power supply is coupled has a value smaller than a value of the carrier frequency in the power conversion operation of the power converter circuit when the second AC power supply (6) is coupled.

4. The power conversion device according to claim 1 or claim 2,
wherein the carrier frequency in the power conversion operation of the power converter circuit (4) when the first AC power supply is coupled has a value greater than a value of the carrier frequency in the power conversion operation of the power converter circuit when the second AC power supply (6) is coupled.

5. A power conversion device control method wherein a carrier frequency for the power conversion operation of a power converter circuit for a drive system of a train is controlled,
wherein a power conversion operation is performed at a first carrier frequency when a first AC power supply is coupled to the power converter circuit (4) via a contactor (12), the power conversion operation converting a first AC power supplied from the first AC power supply into a DC power, the first AC power being an AC power supplied from an overhead line, and the first carrier frequency being selected from a first carrier frequency band which does not overlap with an operating frequency of a device installed in a railway infrastructure coupled via the overhead line and above which thermal effects on a semiconductor element included in the converter are unacceptable, and the power conversion operation is performed at a second carrier frequency when a second AC power supply (6) is coupled to the power converter circuit (4) via a contactor (13), the power conversion operation converting a second AC power supplied from the second AC power supply into a DC power, the second AC power being an AC power generated by driving an electric generator (G) by an operation of an engine, and the second carrier frequency being selected from a second carrier frequency band in which harmonic current in the electric generator is acceptable and above which thermal effects on the semiconductor element included in the converter are unacceptable.

6. The power conversion device control method according to claim 5,
wherein the first carrier frequency and the second carrier frequency are different carrier frequencies.

7. The power conversion device control method according to claim 5 or claim 6,
wherein the first carrier frequency in the power conversion operation of the power converter circuit (4) when the first AC power supply is coupled has a value smaller than a value of the second carrier frequency in the power conversion operation of the power converter circuit when the second AC power supply (6) is coupled.

8. The power conversion device control method according to claim 5 or claim 6,
wherein the first carrier frequency in the power conversion operation of the power converter circuit (4) when the first AC power supply is coupled has a value greater than a value of the second carrier frequency in the power conversion operation of the power converter circuit when the second AC power supply (6) is coupled.

## Patentansprüche

1. Leistungsumwandlungsvorrichtung (7) für ein Antriebssystem eines Zugs, umfassend:
eine Leistungswandlerschaltung (4), die ausgelegt ist, um über einen Schütz (12, 13) mit einer ersten Wechselstromquelle oder einer zweiten Wechselstromquelle (6) gekoppelt zu werden, wobei die Leistungswandlerschaltung ausgelegt ist, um einen Leistungsumwandlungsvorgang auszuführen, um einen ersten Wechselstrom, der von der ersten Wechselstromquelle bereitgestellt wird, oder einen zweiten Wechselstrom, der von der zweiten Wechselstromquelle bereitgestellt wird, in einen Gleichstrom umzuwandeln, wobei der erste Wechselstrom ein Wechselstrom ist, der von einer Oberleitung bereitgestellt wird, und der zweite Wechselstrom ein Wechselstrom ist, der durch Antreiben eines Stromgenerators (G) durch den Betrieb eines Motors erzeugt wird;
**dadurch gekennzeichnet, dass** eine Antriebssteuereinheit (20) ausgelegt ist, um eine Trägerfrequenz im Leistungsumwandlungsbetrieb der Leistungswandlerschaltung (4) zu steuern, sodass bei Bereitstellung des ersten Wechselstroms von der ersten Wechselstromquelle eine Trägerfrequenz aus einem ersten Trägerfrequenzband ausgewählt wird, das nicht mit der Betriebsfrequenz einer Vorrichtung überlappt, die in einer über die Oberleitung gekoppelten Bahninfrastruktur installiert ist, und oberhalb dessen thermische Auswirkungen auf ein im Wandler enthaltenes Halbleiterelement unzulässig sind, und bei Bereitstellung des Wechselstroms von der zweiten Wechselstromquelle (6) eine Trägerfrequenz aus einem zweiten Trägerfrequenzband ausgewählt wird, in dem Oberschwingungsstrom im Stromgenerator zulässig ist und oberhalb dessen thermische Auswirkungen auf das im Wandler enthaltene Halbleiterelement unzulässig sind.

2. Leistungsumwandlungsvorrichtung nach Anspruch 1,
wobei die Antriebssteuereinheit (20) ausgelegt ist, um die Leistungswandlerschaltung (4) durch den Leistungsumwandlungsvorgang bei einer ersten Trägerfrequenz anzusteuern, wenn die erste Wechselstromquelle gekoppelt ist, und die Leistungswandlerschaltung durch den Leistungsumwandlungsvorgang bei einer zweiten Trägerfrequenz anzusteuern, die sich von der ersten Trägerfrequenz unterscheidet, wenn die zweite Wechselstromquelle (6) gekoppelt ist.

3. Leistungsumwandlungsvorrichtung nach Anspruch 1 oder Anspruch 2,
wobei die Trägerfrequenz im Leistungsumwandlungsvorgang der Leistungswanderschaltung (4) bei Kopplung mit der ersten Wechselstromquelle einen kleineren Wert aufweist als der Wert der Trägerfrequenz im Leistungsumwandlungsvorgang der Leistungswandlerschaltung bei Kopplung mit der zweiten Wechselstromquelle (6).

4. Leistungsumwandlungsvorrichtung nach Anspruch 1 oder Anspruch 2,
wobei die Trägerfrequenz im Leistungsumwandlungsvorgang der Leistungswandlerschaltung (4) bei Kopplung mit der ersten Wechselstromquelle einen größeren Wert aufweist als der Wert der Trägerfrequenz im Leistungsumwandlungsvorgang der Leistungswandlerschaltung bei Kopplung mit der zweiten Wechselstromquelle (6).

5. Leistungsumwandlungsvorrichtung-Steuerverfahren, wobei eine Trägerfrequenz für den Leistungsumwandlungsvorgang einer Leistungswandlerschaltung für ein Antriebssystem eines Zugs gesteuert wird,
wobei ein Leistungsumwandlungsvorgang bei einer ersten Trägerfrequenz ausgeführt wird, wenn eine erste Wechselstromquelle mit der Leistungswandlerschaltung (4) über einen Schütz (12) gekoppelt ist, wobei der Leistungsumwandlungsvorgang einen ersten Wechselstrom von der ersten Wechselstromquelle in einen Gleichstrom umwandelt, wobei der erste Wechselstrom ein Wechselstrom ist, der von einer Oberleitung bereitgestellt wird, und die erste Trägerfrequenz aus einem ersten Trägerfrequenzband ausgewählt wird, das nicht mit der Betriebsfrequenz einer Vorrichtung überlappt, die in einer über die Oberleitung gekoppelten Bahninfrastruktur installiert ist, und oberhalb dessen thermische Auswirkungen auf ein im Wandler enthaltenes Halbleiterelement unzulässig sind, und
wobei der Leistungsumwandlungsvorgang bei einer zweiten Trägerfrequenz ausgeführt wird, wenn eine zweite Wechselstromquelle (6) mit der Leistungswandlerschaltung (4) über einen Schütz (13) gekoppelt ist, wobei der Leistungsumwandlungsvorgang den zweiten Wechselstrom, der von der zweiten Wechselstromquelle bereitgestellt wird, in einen Gleichstrom umwandelt, wobei der zweite Wechselstrom ein Wechselstrom ist, der durch Antreiben eines Stromgenerators (G) durch den Betrieb eines Motors erzeugt wird, und die zweite Trägerfrequenz aus einem zweiten Trägerfrequenzband ausgewählt wird, in dem Oberschwingungsstrom im Stromgenerator zulässig ist und oberhalb dessen thermische Auswirkungen auf das im Wandler enthaltene Halbleiterelement unzulässig sind.

6. Leistungsumwandlungsvorrichtung-Steuerverfahren nach Anspruch 5,
wobei die erste Trägerfrequenz und die zweite Trägerfrequenz unterschiedliche Trägerfrequenzen sind.

7. Leistungsumwandlungsvorrichtung-Steuerverfahren nach Anspruch 5 oder Anspruch 6,
wobei die erste Trägerfrequenz im Leistungsumwandlungsvorgang der Leistungswandlerschaltung (4) bei Kopplung mit der ersten Wechselstromquelle einen kleineren Wert aufweist als der Wert der zweiten Trägerfrequenz im Leistungsumwandlungsvorgang der Leistungswandlerschaltung bei Kopplung mit der zweiten Wechselstromquelle (6).

8. Leistungsumwandlungsvorrichtung-Steuerverfahren nach Anspruch 5 oder Anspruch 6,
wobei die erste Trägerfrequenz im Leistungsumwandlungsvorgang der Leistungswandlerschaltung (4) bei Kopplung mit der ersten Wechselstromquelle einen größeren Wert aufweist als der Wert der zweiten Trägerfrequenz im Leistungsumwandlungsvorgang der Leistungswandlerschaltung bei Kopplung mit der zweiten Wechselstromquelle (6).

## Revendications

1. Dispositif de conversion de puissance (7) pour un système d'enregistrement d'un train comprenant :
un circuit convertisseur de puissance (4) configuré pour être couplé à une première alimentation électrique CA ou une deuxième alimentation électrique CA (6) par l'intermédiaire d'un contacteur (12, 13), le circuit convertisseur de puissance étant configuré pour effectuer une opération de conversion de puissance pour convertir une première énergie CA fournie depuis la première alimentation électrique CA ou une deuxième énergie CA fournie depuis la deuxième alimentation électrique CA en une énergie CC, la première énergie CA étant une énergie CA fournie depuis une ligne aérienne, et la deuxième énergie CA étant une énergie CA générée par l'entraînement d'un générateur électrique (G) par un fonctionnement d'un moteur ;
**caractérisé en ce qu'**une unité de commande d'entraînement (20) est configurée pour réguler une fréquence de porteuse dans l'opération de conversion de puissance du circuit convertisseur de puissance (4) de sorte que lorsque la première énergie CA est fournie depuis la première alimentation électrique CA, une fréquence de porteuse est choisie parmi une première bande de fréquence de porteuse qui ne chevauche pas une fréquence de fonctionnement d'un dispositif installé dans une infrastructure ferroviaire couplée par l'intermédiaire de la ligne aérienne et au-dessus de laquelle les effets thermiques sur un élément semi-conducteur inclus dans le convertisseur sont inacceptables, et lorsque la deuxième énergie CA est fournie depuis la deuxième alimentation électrique CA (6), une fréquence de porteuse est choisie parmi une deuxième bande de fréquence de porteuse dans laquelle un courant harmonique dans le générateur électrique est acceptable et au-dessus de laquelle les effets thermiques sur l'élément semi-conducteur inclus dans le convertisseur sont inacceptables.

2. Dispositif de conversion de puissance selon la revendication 1,
dans lequel l'unité de commande d'entraînement (20) est configurée pour entraîner le circuit convertisseur de puissance (4) par l'opération de conversion de puissance à une première fréquence de porteuse lorsque la première alimentation électrique CA est couplée, et pour entraîner le circuit convertisseur de puissance par l'opération de conversion de puissance à une deuxième fréquence de porteuse différente de la première fréquence de porteuse lorsque la deuxième alimentation électrique CA (6) est couplée.

3. Dispositif de conversion de puissance selon la revendication 1 ou la revendication 2,
dans lequel la fréquence de porteuse dans l'opération de conversion de puissance du circuit convertisseur de puissance (4) lorsque la première alimentation électrique CA est couplée a une valeur inférieure à une valeur de la fréquence de porteuse dans l'opération de conversion de puissance du circuit convertisseur de puissance lorsque la deuxième alimentation électrique CA (6) est couplée.

4. Dispositif de conversion de puissance selon la revendication 1 ou la revendication 2,
dans lequel la fréquence de porteuse dans l'opération de conversion de puissance du circuit convertisseur de puissance (4) lorsque la première alimentation électrique CA est couplée a une valeur supérieure à une valeur de la fréquence de porteuse dans l'opération de conversion de puissance du circuit convertisseur de puissance lorsque la deuxième alimentation électrique CA (6) est couplée.

5. Procédé de commande de dispositif de conversion de puissance dans lequel une fréquence de porteuse pour l'opération de conversion de puissance d'un circuit convertisseur de puissance pour un système d'entraînement d'un train est régulée,
dans lequel une opération de conversion de puissance est effectuée à une première fréquence de porteuse lorsqu'une première alimentation électrique CA est couplée au circuit convertisseur de puissance (4) par l'intermédiaire d'un contacteur (12), l'opération de conversion de puissance convertissant une première énergie CA fournie depuis la première alimentation électrique CA en une énergie CC, la première énergie CA étant une énergie CA fournie depuis une ligne aérienne, et la première fréquence de porteuse étant choisie parmi une première bande de fréquence de porteuse qui ne chevauche par une fréquence de fonctionnement d'un dispositif installé dans une infrastructure ferroviaire couplée par l'intermédiaire de la ligne aérienne et au-dessus de laquelle les effets thermiques sur un élément semi-conducteur inclus dans le convertisseur sont inacceptables, et
l'opération de conversion de puissance est effectuée à une deuxième fréquence de porteuse lorsqu'une deuxième alimentation électrique CA (6) est couplée au circuit convertisseur de puissance (4) par l'intermédiaire d'un contacteur (13), l'opération de conversion de puissance convertissant une deuxième énergie CA fournie depuis la deuxième alimentation électrique CA en énergie CC, la deuxième énergie CA étant une énergie CA générée par entraînement d'un générateur électrique (G) par un fonctionnement d'un moteur, et la deuxième fréquence de porteuse étant choisie parmi une deuxième bande de fréquence de porteuse dans laquelle un courant harmonique dans le générateur électrique est acceptable et au-dessus de laquelle les effets thermiques sur l'élément semi-conducteur inclus dans le convertisseur sont inacceptables.

6. Procédé de commande de dispositif de conversion de puissance selon la revendication 5, dans lequel la première fréquence de porteuse et la deuxième fréquence de porteuse sont des fréquences de porteuses différentes.

7. Procédé de commande de dispositif de conversion de puissance selon la revendication 5 ou la revendication 6,
dans lequel la première fréquence de porteuse dans l'opération de conversion de puissance du circuit convertisseur de puissance (4) lorsque la première alimentation électrique CA est couplée a une valeur inférieure à une valeur de la deuxième fréquence de porteuse dans l'opération de conversion de puissance du circuit convertisseur de puissance lorsque la deuxième alimentation électrique CA (6) est couplée.

8. Procédé de commande de dispositif de conversion de puissance selon la revendication 5 ou la revendication 6,
dans lequel la première fréquence de porteuse dans l'opération de conversion de puissance du circuit convertisseur de puissance (4) lorsque la première alimentation électrique CA est couplée a une valeur supérieure à une valeur de la deuxième fréquence de porteuse dans l'opération de conversion de puissance du circuit convertisseur de puissance lorsque la deuxième alimentation électrique CA (6) est couplée.
